# FASCICULE DE BREVET EUROPEEN

(11) **EP 2 655 948 B1**
(45) Date de publication et mention de la délivrance du brevet: **10.08.2016**
(21) Numéro de dépôt: 11797259.6
(22) Date de dépôt: 19.12.2011
(51) Int. Cl.: B60K 15/01, F16L 3/12, F16L 3/13, F16L 3/237, B60T 17/04

(54) **DISPOSITIF DE MAINTIEN D'ELEMENT(S) ALLONGE(S)**
TRÄGERVORRICHTUNG FÜR EIN ODER MEHRERE LÄNGLICHE ELEMENTE
DEVICE FOR SUPPORTING ONE OR MORE ELONGATE ELEMENTS

(30) Priorité: 20.12.2010 FR 1060790
(43) Date de publication de la demande: 30.10.2013
(73) Titulaire: A. RAYMOND et Cie, 38000 Grenoble (FR)
(72) Inventeur: FENOLL, Jonathan, 38130 Echirolles (FR)
(74) Mandataire: RACKETTE Patentanwälte PartG mbB
(86) Numéro de dépôt international: PCT/EP2011/073264
(87) Numéro de publication internationale: WO 2012/084841

(56) Documents cités:
- WO-A1-2009/122119
- DE-C- 861 583
- FR-A1- 2 402 794
- GB-A- 2 098 699
- US-A- 3 216 685

## Description

L'invention concerne un dispositif de maintien d'élément(s) allongé(s) sur un support.

Ce type de dispositifs est couramment utilisé, notamment pour la fixation sur un support, d'un ou plusieurs éléments allongés, par exemple de section globalement cylindrique et pouvant avoir des diamètres différents. Ces éléments allongés sont par exemple des faisceaux électriques rassemblés ou non dans une goulotte, des conduits de ventilation, des canalisations d'eau, utilisés par exemple dans la construction automobile.

La publication FR 2 430 533 décrit un dispositif de maintien pour élément allongé comportant une pièce en plastique monobloc pourvue d'un élément d'appui permettant de solidariser le dispositif de fixation sur un support, et de deux branches de serrage s'étendant en arc de cercle de l'élément d'appui. Les branches de serrage sont couplées à l'élément d'appui par une liaison élastique autorisant le basculement des branches de serrage afin d'autoriser l'introduction de l'élément allongé. La publication FR 2 402 794, conforme au préambule de la revendication 1, décrit un dispositif de maintien sensiblement similaire. Avec ces dispositifs de maintien, le guidage de l'élément allongé n'est assuré que sur une faible longueur et ne permet pas d'empêcher le basculement de l'élément allongé. Le maintien efficace de l'élément allongé n'est donc pas assuré.

La publication US 3,216,685 décrit un dispositif de maintien pour élément allongé comportant une pièce monobloc pourvue de deux branches élastiquement déformables, en arc de cercle, dont les extrémités sont reliées par une patte pouvant être manipulée pour faciliter l'ouverture des branches. Cette patte est par ailleurs prolongée, par une languette de serrage, élastiquement déformable, qui s'étend librement, en arc de cercle, entre les branches. L'incurvation des branches est supérieure à celle de la languette de serrage. Cette dernière assure ainsi à la fois le maintien et le guidage de l'élément allongé. Dans certains cas, il est utile de pouvoir dissocier les fonctions de maintien et de guidage. De plus, les dispositifs de maintien existants sont souvent encombrants et peuvent difficilement être implantés dans des espaces réduits tels que notamment sous le châssis de véhicule automobile pour la fixation de tubes d'alimentation en carburant ou en liquide de freinage.

Le but de l'invention est de remédier à cet inconvénient en proposant un dispositif de maintien simple, compact, assurant un maintien et un guidage efficaces de l'élément allongé sans risque de détérioration, notamment en permettant de dissocier la fonction de maintien de la fonction de guidage, et tout en autorisant une mise en place aisée de l'élément allongé.

A cet effet, l'invention a pour objet un dispositif de maintien d'élément allongé sur un support selon la revendication 1.

Le dispositif de maintien selon l'invention est donc simple et compact. Les bras de maintien massiques et le l'élément surfacique permettent de le rigidifier et donc d'assurer un maintien et un guidage efficaces de l'élément allongé. De plus l'élément surfacique augmente la surface de contact avec l'élément allongé, diminuant d'autant le risque de détérioration de sa surface extérieure.

Le dispositif de maintien selon l'invention peut avantageusement présenter les particularités suivantes :
- les crochets sont espacés entre eux d'au moins deux fois leur largeur, la largeur totale de la surface active étant ainsi supérieure à quatre fois la largeur des crochets ;
- le montant avant et le montant arrière ont des cotés reliés entre eux par au moins un élément de renfort agencé pour renforcer la rigidité du corps et choisi dans le groupe comprenant au moins une paroi, une barre de renfort ;
- au moins un des crochets comporte une nervure de renfort s'étendant sensiblement perpendiculairement à la surface active à l'opposé de la surface de réception pour renforcer la rigidité du crochet ;
- le dispositif de maintien comporte deux modules définissant une pièce monobloc.

La présente invention sera mieux comprise et d'autres avantages apparaîtront à la lecture de la description détaillée de deux modes de réalisation pris à titre d'exemples nullement limitatifs et illustrés par les dessins annexés, dans lesquels :
- Les figures 1 et 2 sont des vues respectivement en perspective et en coupe selon le plan médian P de la figure 1 du dispositif de maintien selon un premier mode de réalisation de l'invention ;
- La figure 3 est une vue en perspective du dispositif de maintien selon un second mode de réalisation de l'invention ;
- Les figures 4 et 5 sont des vues de coté partielles de deux variantes de réalisation de crochet du dispositif de maintien selon l'invention ;
- Les figures 6 et 7 sont des vues de coté partielles de deux variantes de réalisation de la zone de flexion du dispositif de maintien selon l'invention.

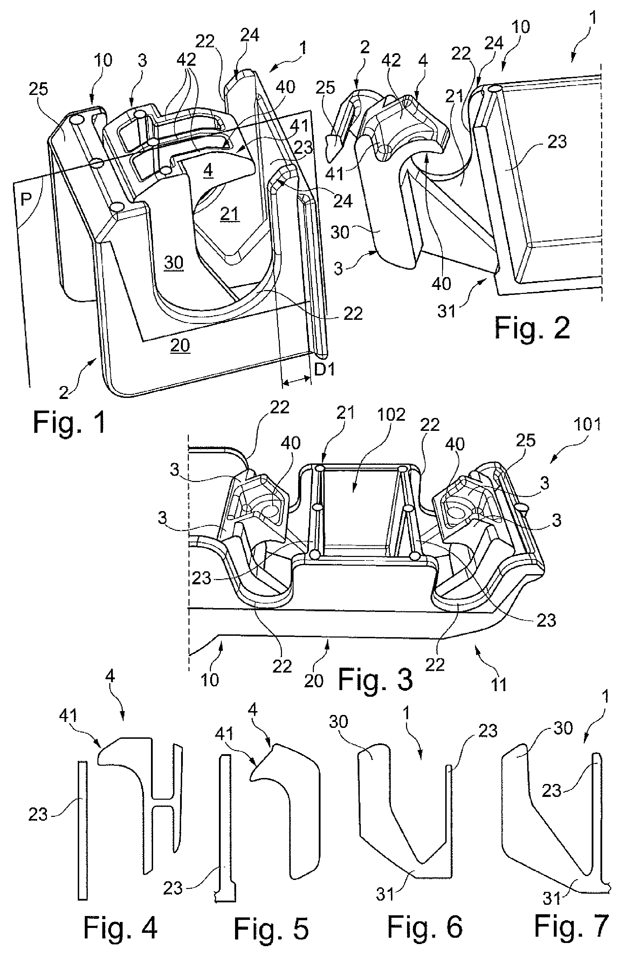

En référence aux figures 1 et 2, le dispositif de maintien 1 d'élément allongé selon un premier mode de réalisation de l'invention se présente sous la forme d'un module monobloc 10 comportant un corps 2 rigide et deux branches de serrage 3, sensiblement symétriques entre elles par rapport au plan médian P du dispositif de maintien 1 représenté sur la figure 1.

Le corps 2 comporte un montant avant 20 et un montant arrière 21 pourvu chacun d'une ouverture 22 en U définissant entre-elles une zone de réception pour le positionnement de l'élément allongé (non représenté) selon l'axe des ouvertures 22. Les cotés droits des montants avant 20 et arrière 21 sont reliés entre eux par une paroi 23 sensiblement parallèle à l'axe de l'ouverture 22 et sensiblement perpendiculaire aux montants avant 20 et arrière 21. Dans cet exemple, la paroi 23 est décalée latéralement de l'ouverture 22 d'une distance D1 (représentée sur la figure 1) permettant d'éviter que l'élément allongé, une fois immobilisé par le dispositif de maintien 1, ne soit en contact avec la paroi 23. Cette paroi 23 représentée pleine sur les figures 1 et 2 peut, selon les besoins, comporter une ou plusieurs ouvertures. Les cotés droits des montants avant 20 et arrière 21 sont par ailleurs pourvus, dans leur partie haute, de chanfreins d'appui 24 destinés à faciliter l'engagement de l'élément allongé dans la zone de réception. Les cotés gauches des montants avant 20 et arrière 21 sont reliés entre eux, dans leur partie haute, par une barre de renfort 25 délimitant en partie la zone de réception. Le corps 2 permet ainsi de garantir la rigidité du dispositif de maintien 1. Selon une variante de réalisation non représentée, la barre de renfort peut être située en partie basse des montants avant et arrière.

Chaque branche de serrage 3 comporte un bras de maintien 30 massique, sensiblement indéformable, raccordé en sa base, au corps 2, par une zone de flexion 31 (représentée sur la figure 2) autorisant la flexion de chaque branche de serrage 3 par rapport au corps 2. Le bras de maintien 30 a par exemple une partie en forme triangulaire dont une des pointes forme la zone de flexion 31. Les figures 6 et 7 illustrent deux exemples de positionnement non limitatifs de la zone de flexion 31, la zone de flexion 31 de la figure 6 étant décalée latéralement de la paroi 23 et donc plus adaptée à des éléments allongés de section importante que celle de la figure 7. Chaque branche de serrage 3 est pourvue, en son extrémité libre, d'un crochet 4 apte à fermer la zone de réception pour bloquer l'élément allongé une fois en place dans la zone de réception. Les crochets 4 des deux branches de serrage 3 sont reliés l'un à l'autre par un élément surfacique 40 au moins en partie en arc de cercle, définissant une zone active destinée à venir en appui sur l'élément allongé pour assurer son maintien et son guidage. La zone active a ainsi une largeur supérieure à celle des bras de maintien 30 et des crochets 4, permettant de réduire la pression locale subie par l'élément allongé. La zone active permet donc de diminuer le risque de dégradation de la surface extérieure de cet élément allongé ce qui est particulièrement intéressant dans le cas de faisceaux électriques. Les crochets 4 sont espacés entre eux d'au moins deux fois la largeur des bras de maintien 30. La largeur totale de la surface active est ainsi supérieure à la largeur cumulée de quatre bras de maintien 30. L'élément surfacique 40 force de plus les branches de serrage 3 d'une même paire à pivoter simultanément. L'élément allongé ne peut ainsi pas se placer de travers dans la zone de réception, son guidage est garanti et les branches de serrage 3 sollicitée seulement en flexion et non en torsion en cas d'effort d'arrachement de l'élément allongé. La surface active peut comporter une portion sensiblement plane, par exemple vers son extrémité libre. Tel que détaillé sur les figures 4 et 5, la partie supérieure de chaque crochet 4 peut être pourvue d'un chanfrein d'ouverture 41 apte à forcer le pivotement provisoire de la branche de serrage 3 lorsqu'un élément allongé est appuyé sur ce chanfrein d'ouverture 41 et le chanfrein d'appui 24 des montants avant 20 et arrière 21. L'introduction de l'élément allongé dans la zone de réception est ainsi facilitée avant que la branche de serrage 3 ne se repositionne par déformation élastique. Chaque crochet 4 comporte une nervure de renfort 42 s'étendant sensiblement perpendiculairement à la surface active, à l'opposé de la surface de réception, et renforçant la rigidité du crochet 4. Dans l'exemple illustré, une nervure de renfort 42 est également prévue entre les deux nervures de renfort 42 prolongeant chaque crochet 4.

La Figure 3 illustre un second mode de réalisation du dispositif de maintien 101 d'élément allongé selon un second mode de réalisation de l'invention. Ce dispositif de maintien 101 comporte deux modules 10, 11 sensiblement similaires à celui des figures 1 et 2. Les éléments mécaniques analogues à ceux des figures 1 et 2 sont affectés des mêmes numéros de référence. Les deux modules 10, 11 sont disposés tête-bêche et forment une pièce monobloc. Ainsi, les branches de serrage 3 des deux modules 10, 11 pivotent en direction opposée. Les modules 10, 11 peuvent bien entendu être disposés selon des configurations différentes. Les montants avant 20 et arrière 21 de chaque module 10, 11 sont prolongés pour se raccorder l'un à l'autre et ménager entre eux un logement 102 apte à recevoir un élément de fixation (non représenté) du dispositif de maintien 101 sur un support (non représenté), par exemple une vis.

Les dispositifs de maintien 1, 101 selon l'invention peuvent être obtenus par moulage d'une matière plastique ayant des propriétés mécaniques adaptées aux sollicitations en flexion, par exemple du polyamide, du polypropylène ou toute autre matière adaptée. Ils sont aptes à recevoir, dans chaque zone de réception, un ou plusieurs éléments allongés mis en place simultanément ou successivement. Une fois placés dans la zone de réception, les éléments allongés sont maintenus et guidés de manière fiable par le dispositif de maintien 1, 101 duquel ils ne peuvent se dégager involontairement. Les dispositifs de maintien 1, 101 selon l'invention peuvent être utilisés pour la fixation de tout type d'éléments allongés.

## Revendications

1. Dispositif de maintien (1, 101) d'élément allongé sur un support, formé d'au moins un module monobloc (10, 11) comportant :
- un corps (2) rigide comprenant au moins une zone de réception longitudinale pour élément allongé,
- au moins une paire de branches de serrage (3) chacune raccordée en sa base audit corps (2) par au moins une zone de flexion (31) autorisant leur pivotement, chaque branche de serrage (3) étant pourvue d'un crochet (4) opposé à ladite zone de flexion (31) de ladite même branche de serrage (3) et apte à fermer ladite zone de réception pour assurer le maintien dudit élément allongé, lesdites branches de serrage (3) comportant chacune un bras de maintien (30) massique sensiblement indéformable formant ledit crochet (4),
**caractérisé en ce que** le corps (2) comprend au moins un montant avant (20) et un montant arrière (21) distant l'un de l'autre, chacun étant pourvu d'une ouverture (22) en forme de U délimitant la zone de réception longitudinale, et **en ce que** lesdites branches de serrage (3) sont alignées longitudinalement entre les deux montants avant et arrière (20, 21), et **en ce que** lesdits crochets (4) des branches de serrage (3) sont reliés l'un à l'autre par un élément surfacique (40) définissant une zone active fermant ladite zone de réception et apte à venir en appui sur ledit élément allongé pour assurer le maintien dudit élément allongé et son guidage sur une largeur supérieure à celle desdits crochets (4), ledit élément surfacique (40) liant ainsi de manière rigide lesdites branches de serrage (3) entre-elles.

2. Dispositif de maintien (1, 101) selon la revendication précédente, **caractérisé en ce que** lesdits crochets (4) sont espacés entre eux d'au moins deux fois leur largeur, la largeur totale de ladite surface active étant ainsi supérieure à quatre fois la largeur desdits crochets (4).

3. Dispositif de maintien (1, 101) selon l'une quelconque des revendications précédentes, **caractérisé en ce que** lesdits montants avant (20) et arrière (21) sont reliés entre eux par au moins un élément de renfort agencé pour renforcer la rigidité dudit corps (2), cet élément de renfort étant choisi dans le groupe comprenant au moins une paroi (23), une barre de renfort (25).

4. Dispositif de maintien (1, 101) selon l'une quelconque des revendications précédentes, **caractérisé en ce qu'**au moins un desdits crochets (3) comporte une nervure de renfort (42) s'étendant sensiblement perpendiculairement à ladite surface active à l'opposé de ladite surface de réception pour renforcer la rigidité dudit crochet (3).

5. Dispositif de maintien (101) selon l'une quelconque des revendications précédentes, **caractérisé en ce qu'**il comporte deux modules (10, 11) définissant une pièce monobloc.

## Patentansprüche

1. Haltevorrichtung (1, 101) eines länglichen Elements an einem Träger, die aus wenigstens einem einstückigen Modul (10, 11) gebildet ist, die
- einen starren Körper (2) mit wenigstens einem länglichen Aufnahmebereich für das längliche Element und
- wenigstens ein Paar Spannschenkel (3) aufweist, von denen jeder an seiner Basis mit dem Körper (2) durch wenigstens einen Biegebereich (31) verbunden ist, der deren Schwenken ermöglicht, wobei jeder Spannschenkel (3) einen Greifer (4) aufweist, der dem Biegebereich (31) des jeweiligen Spannschenkels (3) gegenüberliegt und dazu eingerichtet ist, den Aufnahmebereich zu schließen, um das Halten des länglichen Elements sicherzustellen, wobei die Spannschenkel (3) jeweils einen massigen, im Wesentlichen unverformbaren Haltearm (30) aufweisen, der den Greifer (4) bildet,
**dadurch gekennzeichnet, dass** der Körper (2) wenigstens eine vordere Stütze (20) und eine hintere Stütze (21) aufweist, die voneinander beabstandet sind, wobei jede über eine U-förmige Öffnung (22) verfügt, die den länglichen Aufnahmebereich begrenzt, und dass die Spannschenkel (3) in Längsrichtung zwischen den beiden vorderen und hinteren Stützen (20, 21) angeordnet sind und dass die Greifer (4) der Spannschenkel (3) durch ein flächenartiges Element (40) miteinander verbunden sind, das einen aktiven Bereich bildet, der den Aufnahmebereich schließt und dazu eingerichtet ist, sich an das längliche Element anzulegen, um das Halten des länglichen Elements und seine Führung über eine größere Breite als die der Greifer (4) sicherzustellen, wobei das flächenartige Element (40) somit auf starre Weise die Spannschenkel (3) miteinander verbindet.

2. Haltevorrichtung (1, 101) nach dem vorangehenden Anspruch, **dadurch gekennzeichnet, dass** die Greifer (4) untereinander wenigstens mit dem Zweifachen ihrer Breite beabstandet sind, wobei die Gesamtbreite der aktiven Oberfläche so größer als das Vierfache der Breite der Greifer (4) ist.

3. Haltevorrichtung (1, 101) nach einem der vorangehenden Ansprüche, **dadurch gekennzeichnet, dass** die vorderen (20) und hinteren (21) Stützen durch wenigstens ein Verstärkungselement miteinander verbunden sind, das dazu eingerichtet ist, die Steifigkeit des Körpers (2) zu verstärken, wobei dieses Verstärkungselement aus der Gruppe ausgewählt ist, die wenigstens eine Wand (23) und eine Verstärkungsstange (25) aufweist.

4. Haltevorrichtung (1, 101) nach einem der vorangehenden Ansprüche, **dadurch gekennzeichnet, dass** wenigstens einer der Greifer (4) eine Verstärkungsrippe (42) aufweist, die sich im Wesentlichen rechtwinklig zu der aktiven Oberfläche gegenüber der Aufnahmefläche erstreckt, um die Steifigkeit des Greifers (3) zu verstärken.

5. Haltevorrichtung (101) nach einem der vorangehenden Ansprüche, **dadurch gekennzeichnet, dass** sie wenigstens zwei Module (10, 11) aufweist, die ein einstückiges Teil bilden.

## Claims

1. Device (1, 101) for supporting an elongate element on a support, formed by at least one module in a single piece (10, 11), comprising:
- a rigid body (2) comprising at least one longitudinal receipt area for an elongate element;
- at least one pair of clamping branches (3), each connected at its base to said body (2) by at least one area of deflection (31) which allows the branches to pivot, each clamping branch (3) being provided with a hook (4) opposite said area of deflection (31) of said same clamping branch (3), and which can close said receipt area in order to ensure the support of said elongate element, said clamping branches (3) each comprising a substantially non-deformable mass support arm (30) which forms said hook (4),
**characterised in that** the body (2) comprises at least one front upright (20) and one rear upright (21) which are spaced from one another, each being provided with an opening (22) in the form of a "U" which delimits the longitudinal receipt area, and **in that** said clamping branches (3) are aligned longitudinally between the two, front and rear uprights (20, 21), and **in that** said hooks (4) of the clamping branches (3) are connected to one another by a surface element (40) defining an active area which closes said receipt area, and can be supported on said elongate element in order to ensure the support of said elongate element and its guiding along a width which is greater than that of said hooks (4), said surface element (40) thus connecting said clamping branches (3) rigidly to one another.

2. Support device (1, 101) according to the preceding claim, **characterised in that** said hooks (4) are spaced from one another by at least twice their width, the total width of said active surface thus being more than four times the width of said hooks (4).

3. Support device (1, 101) according to either of the preceding claims, **characterised in that** said front (20) and rear (21) uprights are connected to one another by at least one reinforcement element which is designed to reinforce the rigidity of said body (2), this reinforcement element being selected from the group comprising at least one wall (23) and one reinforcement bar (25).

4. Support device (1, 101) according to any one of the preceding claims, **characterised in that** at least one of said hooks (3) comprises a reinforcement rib (42) which extends substantially perpendicularly to said active surface, opposite said receipt surface, in order to reinforce the rigidity of said hook (3).

5. Support device (1, 101) according to any one of the preceding claims, **characterised in that** it comprises two modules (10, 11) which define a part in a single piece.
